# EUROPÄISCHE PATENTANMELDUNG

(11) **EP 1 291 785 A2**
(43) Veröffentlichungstag der Anmeldung: **12.03.2003**
(21) Anmeldenummer: 02019483.3
(22) Anmeldetag: 30.08.2002
(51) Int. Cl.: G06F 17/30

(54) **Verfahren und Einrichtung zur Datenumwandlung elektronischer Dokumente**

(30) Priorität: 05.09.2001 DE 10143495
(71) Anmelder: SIEMENS AKTIENGESELLSCHAFT, 80333 München (DE)
(72) Erfinder: Voss, Andreas, 42555 Velbert (DE)

(57) **Zusammenfassung**

Die Erfindung bezieht sich auf ein Verfahren und eine Einrichtung zur Verarbeitung von Daten, die von einer Mehrzahl erster Computer (100) an einen zweiten Computer (200) übermittelt werden, zur Umwandlung in mindestens ein Zielformat, das sich von dem Format unterscheidet, in dem die Daten übermittelt wurden, wobei zunächst ein Bereitstellen (210) von mehreren Umwandlungsvorschriften (230) am zweiten Computer (200) erfolgt, die Umwandlungen von Daten aus jeweils einem Format in das mindestens eine Zielformat festlegen; wonach ein Übermitteln (120) von Daten an den zweiten Computer (200) von einem der ersten Computer (100) einschließlich einer Kennzeichnung (140) für eine Vorschrift zur Umwandlung der jeweils übermittelten Daten erfolgt, wobei die Kennzeichnung ein Datenformat aufweist, das zur Verarbeitung am zweiten Computer (200) geeignet ist; wonach schließlich ein Umwandeln (260) besagter Daten in ein Zielformat, unter Verwendung derjenigen Umwandlungsvorschrift erfolgt, die durch die jeweils übermittelten Daten gekennzeichnet wurde.

## Beschreibung

Die vorliegende Erfindung betrifft ein Verfahren sowie eine Einrichtung zur Umwandlung der Datendarstellung von elektronischen Dokumenten aus mindestens einem Ursprungsformat in ein davon abweichendes Zielformat.

Elektronische Dokumente im Sinne der vorliegenden Erfindung umfassen digitale Darstellungen von Arbeits- oder Geschäftsunterlagen, die an einem Computer durch elektronische Signale bearbeitet, gespeichert und an andere Computer übertragen werden können.

Der elektronische Austausch von Geschäftsunterlagen z.B. Bestellungen oder Rechnungen, die maschinell bearbeitet werden können, dient heute in einer Vielzahl von Industriezweigen zur Automatisierung von Transaktionen zwischen Handelspartnern (business-to-business transactions). Neben kurzen Übermittlungszeiten, die z.B. auch durch die Übermittlung von Geschäftsunterlagen via Telex oder Telefax erreicht werden können, bieten automatisierte Geschäftstransaktionen den besonderen Vorteil, dass die übermittelten Geschäftsunterlagen beim Empfänger maschinell weiterverarbeitet werden können, beispielsweise in computergestützten Warenwirtschaftssystemen. Zeitverluste und Fehler, die bei manueller Auftragsabwicklung und Dateneingabe auftreten, werden vermindert. Dabei können oft in erheblichem Umfang Mittel freigesetzt bzw. Kosten eingespart werden.
Die unmittelbare Weiterverarbeitung elektronisch übermittelter Geschäftsunterlagen setzt einen gemeinsamen Datenstandard voraus, der die unterschiedlichen Hard- und Softwareausstattungen überwindet, die in der Regel bei einer Vielzahl von Handelspartnern anzutreffen sind. Die Hardwareausstattungen schließen Personalcomputer (PCs), Arbeitsplatzrechner (workstations) und Großrechner (mainframes) ein. In der Software unterscheiden sich regelmäßig sowohl die Betriebssysteme als auch die eingesetzten Anwendungsprogramme.

Ein seit langem eingeführter Datenstandard zum elektronischen Austausch von Geschäftsunterlagen ist Electronic Data Exchange (EDI). EDI erlaubt es den beteiligten Handelspartnern Geschäftsunterlagen unmittelbar zwischen den für ihre Geschäftsabläufe eingesetzten Computern auszutauschen und zu verarbeiten (end-to-end).

Diese "traditionelles EDI" genannte Form des Datenaustauschs hat jedoch den Nachteil, dass ihre Implementierung bei den einzelnen Handelspartnern oft erhebliche Einführungskosten mit sich bringt. Außerdem wurden bisher zur Datenübermittlung häufig eigene Datennetze verwandt, deren Einsatz sich erst bei einer hohen Mindestzahl von Geschäftstransaktionen lohnt.

Dazu kommt noch, dass es eine Vielzahl verschiedener EDI-Datenformate gibt, die z.B. für verschiedene Industriezweige entwickelt wurden.

Die Notwendigkeit der Konvertierung von Geschäftsunterlagen zwischen verschiedenen EDI-Datenformaten einerseits und der Betrieb von eigens für den Datenaustausch innerhalb bestimmter Kreise von Handlespartnern geschaffener Datennetze andererseits hat zur Entwicklung so genannter VANs (value added networks) geführt. Darunter fallen Dienstleister, die sowohl die Konvertierung zwischen verschiedenen EDI-Datenformaten als auch die Datenübertragung zwischen den angeschlossenen Handelspartnern übernehmen.

Heute setzen VAN-Dienstleister in zunehmendem Maße offene Datennetze, insbesondere das Internet zur Datenübermittlung ein. Einige VAN-Dienstleister bieten darüber hinaus auch die Umwandlung betriebsinterner Daten in ein EDI-Datenformat an.

Derzeit lässt sich z.B. aus der Internetquelle www.iscinf.com ein derartiges Angebot entnehmen.

Einerseits sind die Kosten der Internet-VANs für kleine und mittlere Betriebe immer noch nicht rentabel, andererseits haben große Unternehmen oft ein hohes Interesse z.B. ihre Lieferanten oder Kunden in den elektronischen Datenaustausch einzubinden. Dazu sind die u.a. die folgenden Vorschläge bekannt.

Aus dem veröffentlichten Aufsatz Fu u.a.: "A Practical Approach to Web-Based Internet EDI", der erschienen ist in "Proceedings of the 19th International Conference on Distributed Computing Systems Workshop (ICDCS'99 Workshop)" (1999), ist ein Verfahren zu entnehmen, mit dem eine Vielzahl von ersten Computern, so genannten "spokes", Geschäftsunterlagen von einem zweiten Computer, dem so genannten "hub", empfangen und zurücksenden können. Für den letzten Fall wird in dem genannten Aufsatz vorschlagen, die Daten am jeweiligen "spoke" in ein Zielformat des "hub" umzuwandeln und zu übermitteln. Dazu benötigt der "spoke" einen Browser, der besondere Zusatzprogramme (applets) ausführen kann und ein besonderes Konvertierungsprogramm (adapter), falls maschinell erzeugte Daten am "spoke" Verwendung finden sollen. Weiterhin werden in dem genannten Aufsatz zwei Möglichkeiten beschrieben, Daten die an einem "spoke" erzeugt werden, in ein Zielformat für den "hub" umzuwandeln und zu übermitteln. Erstens, die Daten manuell zu erstellen, durch Ausfüllen eines Formulars, das der "hub" einem Browser am "spoke" bereitstellt. Der Browser stellt die Daten in einem formularbasierten Format dar und wandelt sie mit Hilfe besonderer Zusatzprogramme (applets) in ein Zielformat für den "hub" um und übermittelt sie an diesen. Falls die Daten mit einem Anwendungsprogramm am "spoke" maschinell erzeugt werden z.B. mit einem Warenwirtschaftssystem, wird in dem genannten Aufsatz eine zweite Möglichkeit vorgeschlagen. Aus dem Ursprungsformat des Anwendungsprogramms werden die Daten mit einem besonderen Konvertierungsprogramm (adapter), am "spoke" in ein formularbasiertes Format des Browsers umgesetzt und wie die manuell erstellten Daten mit Hilfe besonderer Zusatzprogramme (applets) in ein Zielformat für den "hub" umgewandelt und übermittelt. Die Daten werden über das Internet übermittelt.

In der Veröffentlichung Westarp u.a.: "Innovationen im Bereich der B2B-Kommunikation - Fallstudien und technische Lösungen zu WebEDI", die erschienen ist in Steiner u.a.: "Elektronische Dienstleistungsgesellschaft und Financial Engineering" Seite 263-285 (1999), ist ein ähnliches Verfahren angegeben, mit dem eine Vielzahl von ersten Computern, die Kunden zugeordnet sind, Geschäftsunterlagen - als Beispiel werden Rechnungen angegeben - von einem zweiten Computer, der einem Unternehmen zugeordnet ist, empfangen und zurückgesandt werden können. Für den Fall der Datenübermittlung von vielen an einen Computer wird in der genannten Veröffentlichung vorgeschlagen, die Umwandlung der zu übermittelnden Daten zwischen dem jeweiligen ersten Computer und dem zweiten Computer aufzuteilen und die Daten in einem allen ersten Computern gemeinsamen Zwischenformat an den zweiten Computer zu übermitteln.
Dazu benötigt der jeweilige erste Computer ebenfalls einen Browser, der besondere Zusatzprogramme (applets) ausführen kann. Am zweiten Computer wird ein so genannter Konverter benötigt, um die übermittelten Daten aus dem gemeinsamen Zwischenformat in ein Zielformat für den zweiten Computer umzuwandeln. Als gemeinsames Zwischenformat dient in der genannten Veröffentlichung ein formularbasiertes Format, das vom jeweiligen Browser an allen ersten Computern dargestellt werden kann.

Ein so dargestelltes Formular kann manuell ausgefüllt oder ergänzt und mit Hilfe besonderer Zusatzprogramme (applets) an den zweiten Computer übermittelt werden. Dort werden die übermittelten Daten aus dem formularbasierten Zwischenformat mit Hilfe eines Konverters in ein Zielformat für den zweiten Computer umgewandelt. Für Daten, die mit einem Anwendungsprogramm an einem ersten Computer maschinell erzeugt werden, wird in der genannten Veröffentlichung vorgeschlagen, die Daten aus dem Ursprungsformat des Anwendungsprogramms mit einem besonderen Zusatzprogramm des Browsers (applet), am jeweiligen ersten Computer in ein formularbasierte Zwischenformat umzusetzen, und wie die manuell erstellten Daten mit Hilfe besonderer Zusatzprogramme (applets) an den zweiten Computer zu übermitteln und dort in ein Zielformat für den zweiten Computer zu konvertieren. Die Daten werden über das Internet übertragen.

Die geschilderten Lösungen, mit denen eine Vielzahl von ersten Computern Geschäftsunterlagen über das Internet an einen zweiten Computer übermitteln können, bieten zwar den Vorteil, dass die Daten mit sehr einfachen Mitteln in ein Zielformat für den zweiten Computer umgewandelt werden können, aber sie bergen zumindest für die Benutzer der ersten Computer eine Reihe von Nachteilen.

Als Beispiel sei angeführt eine Vielzahl von Kunden, die ihre Bestellungen als elektronische Dokumente an einen Lieferanten über das Internet übermitteln. Alle Kunden, die für ihre Betriebsführung eigene Anwendungsprogramme anwenden, z.B. Warenwirtschaftssysteme, müssen die Daten für jede Bestellung in ein betriebsfremdes Format umwandeln. Das ist allein aufgrund der - zumindest zeitweiligen - doppelten Datenhaltung nachteilig. Das Aufstellen einer Zuordnung zwischen Bestelleinträgen in einem hausinternen Datenformat und den entsprechenden Einträgen im Zielformat des Lieferanten als Umwandlungsvorschrift erfordert außerdem regelmäßig die Beteiligung des Kunden. Der damit verbundene Aufwand kann erheblich sein und ist nur solange einmalig, wie ein hausinternes Datenformat und die zugehörigen Anwendungsprogramme unverändert bleiben.

Die Umwandlungsprogramme bzw. Zusatzprogramme (applets) für einen Browser selbst, die ja am Computer des Kunden ausgeführt werden sollen, bergen weitere Nachteile. Zum einen müssen sie bereitgestellt und gepflegt werden und der Kunde muss mindestens einen Teil des damit verbundenen Aufwands übernehmen. Selbst wenn die Zusatzprogramme (applets) automatisch vom Lieferanten über das Internet bereitgestellt werden, obliegt es dem Kunden ihre Funktionsbereitschaft sicherzustellen und ihre fehlerfreie Ausführung zu überwachen. Gerade automatisch eingespielte Zusatzprogramme können jedoch leicht andere Zusatzprogramme stören oder von ihnen gestört werden. Darüber hinaus muss ein Kunde, der bei mehr als einem Lieferanten bestellt, besondere Sorge tragen, dass jeweils nur die Zusatzprogramme des jeweiligen Lieferanten zur Ausführung kommen.

Der vorliegenden Erfindung liegt die Aufgabe zugrunde, innerhalb eines gattungsgemäßen Verfahrens oder einer gattungsgemäßen Einrichtung einer Vielzahl von ersten Computern, die Daten an einen zweiten Computer übertragen, die Umwandlung von Daten technisch einfacher und anwendungsfreundlicher zu gestalten.

Diese Aufgabe wird gelöst durch ein Verfahren oder eine Einrichtung mit folgenden Schritten: Erstens werden am zweiten Computer Umwandlungsvorschriften bereitgestellt, die Umwandlungen von Daten aus Ursprungsformaten einer Vielzahl von ersten Computern in ein Zielformat am zweiten Computer festlegen. Zweitens werden dem zweiten Computer zusammen mit den jeweiligen Ursprungsdaten Kennzeichnungen übermittelt in einem Datenformat, das der zweite Computer ohne Umwandlung verarbeitet. Schließlich wird eine Umwandlung der übermittelten Daten aus dem jeweiligen Ursprungsformat in ein Zielformat am zweiten Computer durchgeführt, unter Verwendung derjenigen Umwandlungsvorschrift, die durch die Kennzeichnung vom jeweiligen ersten Computer bestimmt wurde.

Diese Lösung bietet den Vorteil, die Umwandlung von Daten an einer Vielzahl von ersten Computern vor der Übermittlung an einen zweiten Computer auszusetzen und damit die Benutzer der ersten Computer vom Betrieb und der Wartung von Programmen zur Datenumwandlung zu befreien und eine ungehinderte Verarbeitung der elektronischen Dokumente in den ursprünglichen Datenformaten der jeweiligen ersten Computer zu ermöglichen.

Weitere die Erfindung verbessernde Maßnahmen sind in den Unteransprüchen angegeben oder werden nachstehend gemeinsam mit der Beschreibung eines bevorzugten Ausführungsbeispiels der Erfindung anhand der Fig. 1 bis 3 näher dargestellt. Es zeigen:
- Fig. 1: ein Diagramm des grundlegenden Ablaufs des erfindungsgemäßen Verfahrens,
- Fig. 2 a und 2b: schematische Darstellungen eines elektronischen Dokuments in tabellarischer Form,
- Fig. 3: eine bevorzugte Ausführungsform einer Umwandlungsvorschrift.

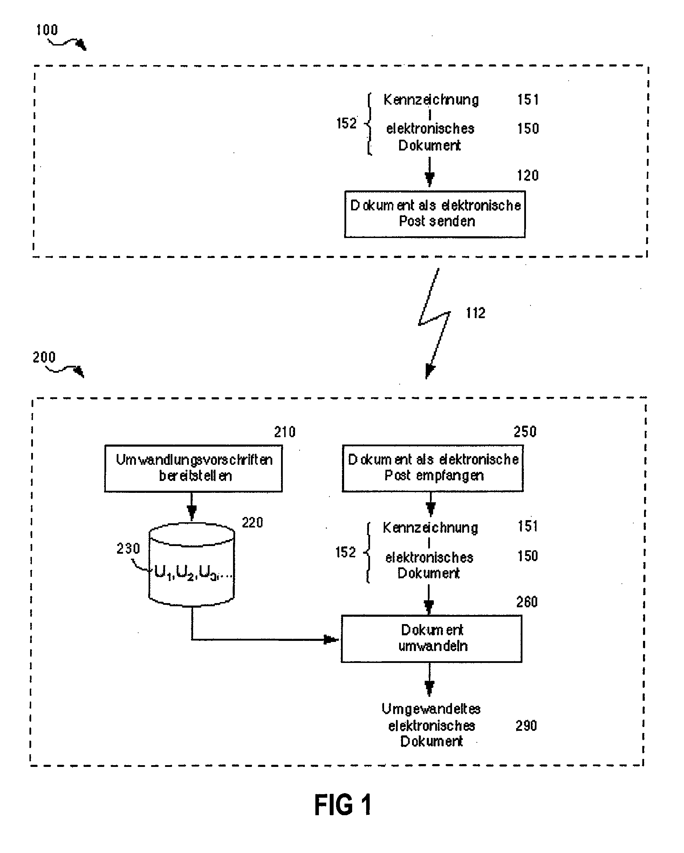

Fig. 1 zeigt ein Diagramm des grundlegenden Ablaufs des erfindungsgemäßen Verfahrens. Darin werden an einem ersten Computer 100 aus einer Vielzahl erster Computer Geschäftsunterlagen als elektronische Dokumente an einen zweiten Computer 200 übermittelt. Am zweiten Computer 200 wird mit Hilfe einer bestimmten Vorschrift aus einer Vielzahl bereitgestellter Umwandlungsvorschriften 230, ein elektronisches Dokument 150, das vom ersten an den zweiten Computer übermittelt wurde, aus seinem Ursprungsformat in ein umgewandeltes elektronisches Dokument 290 umgewandelt, das ein bestimmtes Zielformat aufweist. Dabei wird aus der Vielzahl von Umwandlungsvorschriften 230 am zweiten Computer 200 diejenige ausgeführt, die durch eine Kennzeichnung 140 des elektronischen Dokuments 150 vorbestimmt ist.

Das Ablaufdiagramm enthält die folgenden Schritte: Schritt 210 "Umwandlungsvorschriften bereitstellen", Schritt 120 "Dokument senden" und Schritt 250 "Dokument empfangen", sowie Schritt 260 "Dokument umwandeln". Vor der Erläuterung der folgenden Schritte: Schritt 120 "Dokument senden", Schritt 250 "Dokument empfangen" und Schritt 260 "Dokument umwandeln" wird auf bevorzugte Ausführungsformen des Schritts 210 "Umwandlungsvorschriften bereitstellen" näher eingegangen. Dazu werden zunächst ein Ursprungsdatenformat des elektronischen Dokuments 150 und ein Zieldatenformat des umgewandelten elektronischen Dokuments 290 an Beispielen erläutert.

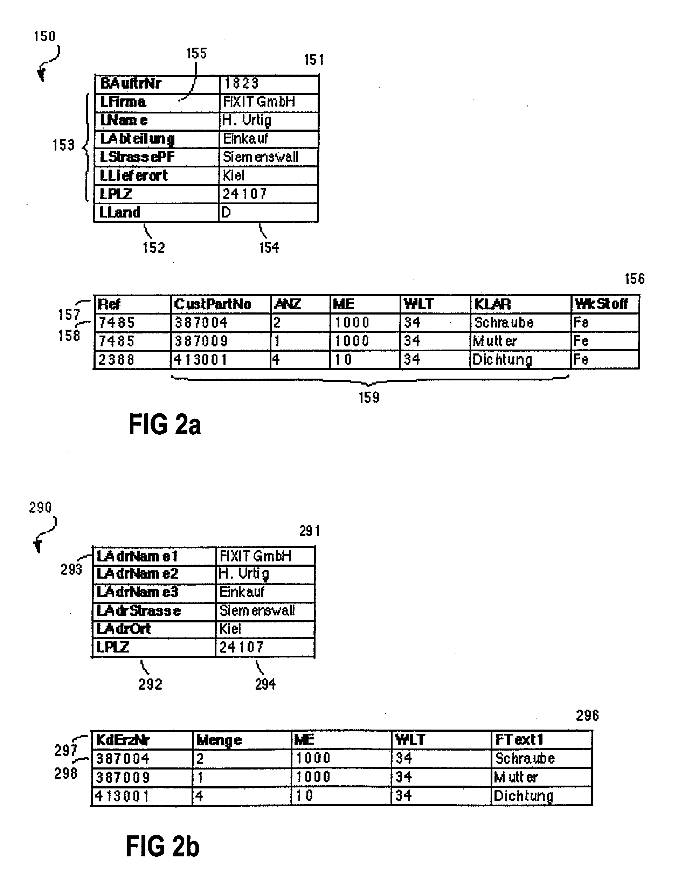

Es wird nun auf Fig. 2 a Bezug genommen. Sie zeigt ein Beispiel eines elektronischen Dokuments 150, etwa einer Bestellung, in tabellarischer Form in einem Ursprungsformat, wie es vom ersten Computer 100 an den zweiten Computer 200 übermittelt wird bzw. übermittelt wurde. Fig. 2 b zeigt ein Beispiel eines umgewandelten elektronischen Dokuments 290 in einem Zielformat, in welches das ursprüngliche elektronische Dokument 150 am zweiten Computer 200 umgewandelt wurde.

Die Daten des elektronischen Dokuments 150 im Ursprungsformat enthalten erstens einen Datensatz von einmalig auftretenden Datenfeldern, die im Folgenden Kopfdaten 151 genannt werden. Die Kopfdaten des elektronisches Dokuments 150 tragen die Kopffeldbezeichner 152 "BAuftrNr", "LFirma", "LName", "LAbteilung", "LStrassePF", "LLieferort", "LPLZ" und "LLand". Die Datenfelder der Kopfdaten enthalten beispielsweise die Kopfdateneinträge 154 "1823", "FIXIT GmbH", "H. Urtig", "Einkauf", "Siemenswall", "Kiel", "24107" und "D". Zweitens enthält das elektronische Dokument 150 eine Reihe von Datensätzen mit Datenfeldern, deren Einträge sich wiederholen können und die im folgenden Positionsdaten 156 genannt werden. Die Positionsdaten des elektronischen Dokuments 150 tragen die Positionsfeldbezeichner 157 "Ref", "CustPartNo", "ANZ", "ME", "WLT", "KLAR" und "WkStoff". Die Datenfelder der Positionsdaten enthalten beispielsweise die ersten Positionsdateneinträge 158 in der zweiten Zeile der Tabelle 156 "7485", "387004", "2", "1000", "34", "Schraube", "Fe" sowie die zweiten Positionsdateneinträge in der nachfolgenden Zeile "7485", "387009", "1", "1000", "34", "Mutter", " Fe" , und schließlich die dritten Positionsdateneinträge in der letzten Zeile "2388", "413001", "4", "10", "34", "Dichtung", "Fe".

Die spalten- bzw. zeilenweise Darstellung der Ursprungsdaten des elektronischen Dokuments 150 hat nur beispielhaften Charakter. Andere Darstellungen können z.B. nur spaltenweise oder nur zeilenweise dargestellte Datensätze umfassen.

Die Daten im Zielformat des umgewandelten elektronischen Dokuments 290 enthalten erstens einen Satz von Kopfdaten 291 mit den Kopffeldbezeichnern 292 "LAdrName1", "LAdrName2", "LAdrName3", "LAdrStrasse", "LAdrOrt" und "LPLZ". Die Datenfelder der Kopfdaten enthalten beispielsweise die Kopfdateneinträge 294 "FIXIT GmbH", "H. Urtig", "Einkauf", "Siemenswall", "Kiel", "24107". Zweitens enthält das umgewandelte elektronische Dokument 290 eine Reihe sich wiederholender Datensätze als Positionsdaten 296 mit den Positionsfeldbezeichnern 297 "KdErzNr", "Menge", "ME", "WLT", "FText1" Die Datenfelder der Positionsdaten enthalten beispielsweise die ersten Positionsdateneinträge 298 in der zweiten Zeile der Tabelle 296 "387004", "2", "1000", "34", "Schraube", sowie die zweiten Positionsdateneinträge in der nachfolgenden Zeile "387009", "1", "1000", "34", "Mutter", und schließlich die dritten Positionsdateneinträge in der letzten Zeile "413001", "4", "10", "34", "Dichtung".

In diesem Beispiel weisen die Datensätze sowohl der Kopfdaten 151 als auch der Positionsdaten 156 in den Ursprungsdaten des elektronischen Dokuments 150 mehr Felder auf als die Kopfdaten 291 und die Positionsdaten 296 in den Zieldaten des umgewandelten elektronischen Dokuments 290. Bei dem Schritt 210 "Umwandlungsvorschriften bereitstellen" kommt es nur darauf an, dass den Kopffeldbezeichnern 292 und den Positionsfeldbezeichnern 297 der Zieldaten des umgewandelten elektronischen Dokuments 290 eindeutig Kopffeldbezeichner 153 und Positionsfeldbezeichner 159 der Ursprungsdaten des elektronischen Dokuments 150 zugeordnet werden können. Datenfelder in den Ursprungsdaten des elektronischen Dokuments 150 z.B. "Ref und "WkStoff", denen keine Datenfelder in den Zieldaten des umgewandelten elektronischen Dokuments 290 entsprechen, sind für die Datenumwandlung ohne Bedeutung. Die spalten- bzw. zeilenweise Darstellung der Zieldaten des umgewandelten elektronischen Dokuments 290 hat wie bereits im Zusammenhang mit den Ursprungsdaten erwähnt, hier ebenfalls nur beispielhaften Charakter.

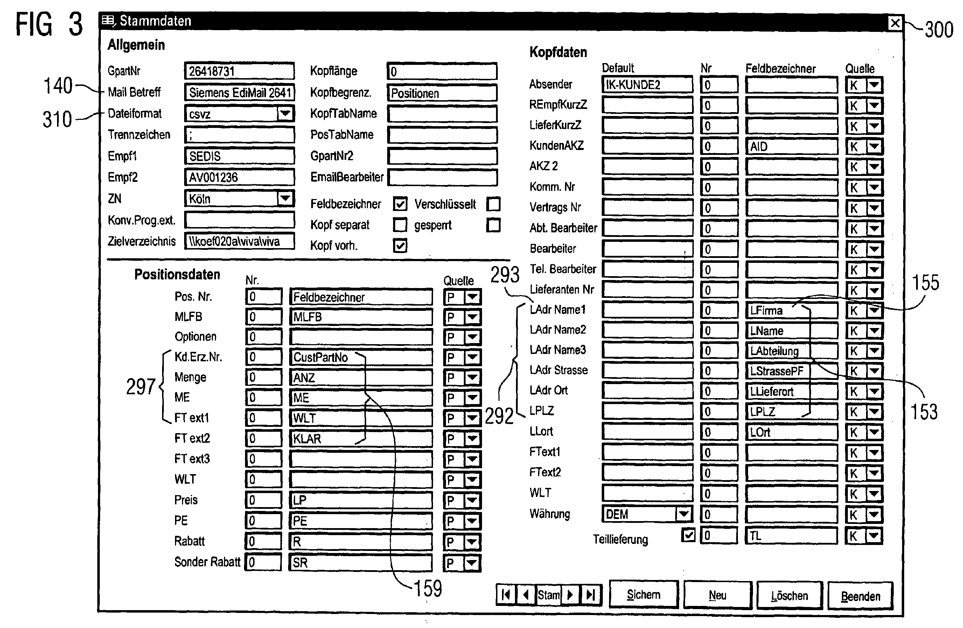

Da die Formate der elektronischen Dokuments 150 und des umgewandelten elektronischen Dokuments 290 nicht übereinstimmen ist eine Umwandlung nötig. Datenumwandlungen, d.h. Umsetzungen von einer Datendarstellung in eine andere Datendarstellung, werden durch Bereitstellen von Umwandlungsvorschriften 230 am zweiten Computer 200 ermöglicht. Fig. 3 zeigt eine bevorzugte Ausgestaltung einer Umwandlungsvorschrift als so genannte Parametriermaske 300. Eine Parametriermaske umfasst die Information, die jeweils zur Durchführung einer Umwandlungsvorschrift notwendig ist. In einer Parametriermaske werden den Kopffeldbezeichnern 292 im Zielformat die zugehörigen Kopffeldbezeichner 153 im Ursprungsformat zugeordnet. Dabei wird jeweils ein Kopffeldbezeichner 155 z.B. "LFirma" des Ursprungsformats unter dem Kopffeldbezeichner 293 des Zielformats, hier "LAdrName1" in die Parametriermaske 300 eingetragen. Weiterhin werden den Positionsfeldbezeichnern 297 im Zielformat die zugehörigen Positionsfeldbezeichner 159 im Ursprungsformat zugeordnet und entsprechend eingetragen. Ein Zielformat kann sowohl in den Kopfdaten 291 als auch in den Positionsdaten 296 Datenfelder mit festen Einträgen enthalten, die unabhängig von den jeweiligen Ursprungsdaten sind (default). Solche Einträge können in einer bevorzugten Ausgestaltung des erfindungsgemäßen Verfahrens mit der Parametriermaske 300 ebenfalls vorgenommen und bei der Datenumwandlung berücksichtigt werden.

Für jedes Zielformat können mehrere Parametriermasken aufgestellt werden. Dabei können etwa durch die Auswahl 310 in der Parametriermaske 300 verschiedene Datenformate von Ursprungsdaten und/oder verschiedene Anwendungsprogramme berücksichtigt werden, mit denen die jeweiligen Ursprungsdaten erzeugt wurden. Zur Umwandlung einer Vielzahl elektronischer Dokumente 150 eines bestimmten Ursprungsformats in ein umgewandeltes elektronisches Dokument 290 mit einem bestimmten Zielformat muss jedoch nur eine Parametriermaske 300 ausgefüllt werden.

Die Bereitstellung von Umwandlungsvorschriften 230 in Schritt 210 erfolgt am zweiten Computer 200 vorzugsweise durch ein interaktives Computerprogramm, das vorbestimmte Parametriermasken 300 für bestimmte Zielformate umfasst. In einer bevorzugten Ausgestaltung des erfindungsgemäßen Verfahrens werden einem Benutzer des zweiten Computers 200 Parametriermasken 300 zum Ausfüllen angezeigt. Eine Parametriermaske 300 umfasst eine Kennzeichnung 140 mit der sie einem als elektronische Post 130 übermitteltes elektronisches Dokument 150 mit der entsprechenden Kennzeichnung 140 zugeordnet werden kann zur Umwandlung des elektronischen Dokuments 150 aus seinem Ursprungsformat in ein umgewandeltes elektronisches Dokument 290 mit dem Zielformat, für das die jeweilige Parametriermaske 300 vorbestimmt ist. Die bereitgestellten Umwandlungsvorschriften 230 werden am zweiten Computer 200 vorzugsweise in einem nicht flüchtigen (non-volatile) Speicher 220 gehalten.

Nach der Erläuterung bevorzugter Ausführungsformen der Bereitstellung von Datenumwandlungsvorschriften in Schritt 210 soll wieder auf Fig. 1 Bezug genommen und die folgenden Schritte näher erläutert werden: Schritt 120 "Dokument senden", Schritt 250 "Dokument empfangen" und Schritt 260 "Dokument umwandeln".

Im Folgenden wird auf die Reihenfolge der Schritte 120, 210, 250 und 260 im Ablaufdiagramm näher eingegangen. Schritt 120 "Dokument senden" und Schritt 250 "Dokument empfangen" erfolgen gleichzeitig oder vorzugsweise der Schritt 250 "Dokument empfangen" zeitlich unabhängig nach dem Schritt 120 "Dokument senden". Ein elektronisches Dokument wird nach dem Empfang im Schritt 250 umgewandelt im Schritt 260. Vor der Umwandlung im Schritt 260 muss eine zugehörige Umwandlungsvorschrift bereitgestellt worden sein im Schritt 210. Der Schritt 210 und der Schritt 250 "Dokument empfangen" erfolgen vorzugsweise unabhängig voneinander. Eine bestimmte Umwandlungsvorschrift kann solange nicht in Schritt 210 bearbeitet werden, wie sie zur Umwandlung eines Dokuments in Schritt 260 benutzt wird. Ebenso kann eine Vorschrift solange nicht zur Umwandlung eines Dokuments in Schritt 260 benutzt werden, wie sie in Schritt 210 bearbeitet wird.

Zum Senden eines elektronischen Dokuments 150 in Schritt 120, das beispielsweise mit einem computergestützten Warenwirtschaftssystem erstellt wurde, vom ersten Computer 100 an den zweiten Computer 200 wird vorzugsweise ein Dienstprogramm verwendet, ein so genannter "E-Mail Client" wie z.B. das Programm Outlook der Microsoft Corp., Redmond, Wash., USA. Vorzugsweise verfügt ein solches Dienstprogramm über eine so genannte "MAPI32" Schnittstelle (Messaging Application Programming Interface), mit der die Ursprungsdaten 150 in einem bekannten, vorbestimmten Format übertragen werden, das die Durchführung von Umwandlungsvorschriften 230 vereinfacht.

Das elektronische Dokument 150 wird vorzugsweise als Anhang einer elektronischen Post 130 (E-Mail) versandt, wobei die elektronische Post eine Kennzeichnung 140, vorzugsweise eine textuelle Kennzeichnung aufweist, die weiterhin vorzugsweise in der Betreffzeile übermittelt wird. Beim manuellen Senden in Schritt 120 eines elektronischen Dokuments 150 trägt ein Benutzer des ersten Computers 100 erstens eine vorbestimmte Kennzeichnung 140 in die Betreffzeile einer elektronischen Post 130 ein, zweitens fügt er das elektronische Dokument 150 als Anhang (attachment) der elektronischen Post 130 bei und sendet schließlich die elektronische Post 130 an den zweiten Computer 200. Zum automatischen Senden elektronischer Dokumente in Schritt 120 am ersten Computer 100 wird vorzugsweise ein Dienstprogramm eingesetzt, das in vorbestimmten zeitlichen Abständen ein bestimmtes Verzeichnis am ersten Computer 100 auf den Eingang elektronischer Dokumente hin überwacht und diese selbständig jeweils als Anhang einer elektronischen Post mit der jeweils vorbestimmten Kennzeichnung an den zweiten Computer 200 sendet.

Zur Übermittlung des elektronischen Dokuments 150 in Schritt 120 als elektronische Post 130 mit einer Kennzeichnung 140, die vom ersten Computer 100 an zweiten Computer 200 gesendet wird, dient vorzugsweise das Internet als verbindendes Computernetzwerk 112.

Zum Empfangen eines elektronischen Dokuments 150 in Schritt 250 als elektronische Post 130 mit einer Kennzeichnung 140, am zweiten Computer 200 wird vorzugsweise ein Dienstprogramm eingesetzt, das die elektronische Post 130 aufnimmt und zur Umwandlung bereithält.

Zur Umwandlung eines elektronischen Dokuments 150 in Schritt 260 am zweiten Computer 200 wird diejenige Umwandlungsvorschrift aus der Vielzahl bereitgestellter Umwandlungsvorschriften 230 identifiziert, welche dieselbe Kennzeichnung 140 in der zugehörigen Parametriermaske 300 trägt wie die Kennzeichnung 140 der elektronischen Post 130, welche das elektronische Dokument 150 enthält. Einzelheiten der Umwandlung von einem bestimmten Datenformat in ein anderes Datenformat sind hier nicht erwähnt im Hinblick darauf, dass die Durchführung solcher Datenkonvertierungen dem Fachmann wohlbekannt ist.

Falls die Kennzeichnung 140 oder die zugehörige Umwandlungsvorschrift in der Vielzahl bereitgestellter Umwandlungsvorschriften 230 nicht enthalten ist, wird vorzugsweise das empfangene elektronische Dokument 150 zusammen mit der Kennzeichnung 140 festgehalten. Nachdem eine geeignete Umwandlungsvorschrift bereitgestellt worden ist, kann die Umwandlung in Schritt 260 wiederholt werden. Falls die Umwandlung in Schritt 260 wegen mangelnder Übereinstimmung des empfangenen elektronischen Dokuments 150 mit der durch die Kennzeichnung 140 bestimmten Umwandlungsvorschrift nicht durchgeführt werden kann, wird vorzugsweise das empfangene elektronische Dokument 150 zusammen mit der Kennzeichnung 140 ebenfalls festgehalten. Weiterhin kann in der Vielzahl bereitgestellter Umwandlungsvorschriften 230 diejenige Umwandlungsvorschrift, die durch die Kennzeichnung 140 bestimmt ist, von weiteren Ausführungen ausgenommen werden.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

## Patentansprüche

1. Verfahren zur Verarbeitung von Daten, die von einer Mehrzahl erster Computer (100) an einen zweiten Computer (200) übermittelt werden, zur Umwandlung in mindestens ein Zielformat, das sich von dem Format unterscheidet, in dem die Daten übermittelt wurden, mit den Schritten:
Bereitstellen (210) von mehreren Umwandlungsvorschriften (230) am zweiten Computer (200), die Umwandlungen von Daten aus jeweils einem Format in das mindestens eine Zielformat festlegen;
Übermitteln (120) von Daten an den zweiten Computer (200) von einem der ersten Computer (100) einschließlich einer Kennzeichnung (140) für eine Vorschrift zur Umwandlung der jeweils übermittelten Daten, wobei die Kennzeichnung ein Datenformat aufweist, das zur Verarbeitung am zweiten Computer (200) geeignet ist; und
Umwandeln (260) besagter Daten in ein Zielformat, unter Verwendung derjenigen Umwandlungsvorschrift, die durch die jeweils übermittelten Daten gekennzeichnet wurde.

2. Verfahren nach Anspruch 1, wobei besagtes mindestens eine Zielformat mindestens ein Format einschließt, das zur Verarbeitung der Daten am zweiten Computer (200) geeignet ist.

3. Verfahren nach Anspruch 1 oder 2, wobei die Mehrzahl der am zweiten Computer (200) bereitgestellten Umwandlungsvorschriften (230) mindestens die Vorschriften umfasst, die Umwandlungen von Daten aus den verschiedenen Formaten von der Mehrzahl erster Computer (100) in das mindestens eine Zielformat festlegen.

4. Verfahren nach einem der Ansprüche 1 bis 3, wobei die Umwandlung besagter Daten vorbestimmte Einträge in ein Zielformat einschließt.

5. Verfahren nach einem der Ansprüche 1 bis 4, wobei die an den zweiten Computer (200) übermittelten Daten eine Kennzeichnung (140) für eine Vorschrift zur Umwandlung besagter Daten einschließen, die ein textuelles Datenformat aufweist.

6. Verfahren nach einem der Ansprüche 1 bis 5, wobei die an den zweiten Computer (200) übermittelten Daten selbst ein textuelles Datenformat aufweisen.

7. Verfahren nach einem der Ansprüche 1 bis 6, wobei die übermittelten Daten bei mangelnder Übereinstimmung mit der jeweils vorbestimmten Umwandlungsvorschrift in ihrem ursprünglichen Format festgehalten und weitere Ausführungen besagter Umwandlungsvorschrift ausgesetzt werden.

8. Einrichtung zur Durchführung eines Verfahrens nach einem der Ansprüche 1 bis 7 mit:
einer Rechen- und Speichereinheit zum Bereitstellen von mehreren Umwandlungsvorschriften (230) am zweiten Computer (200), die Umwandlungen von Daten aus jeweils einem Format in das mindestens eine Zielformat festlegen;
einem Computernetzwerk (112) zum Übermitteln von Daten an den zweiten Computer (200) von einem der ersten Computer (100) einschließlich einer Kennzeichnung (140) für eine Vorschrift zur Umwandlung der jeweils übermittelten Daten, wobei die Kennzeichnung ein Datenformat aufweist, das zur Verarbeitung am zweiten Computer (200) geeignet ist; und
einer Rechen- und Speichereinheit zum Umwandeln besagter Daten in ein Zielformat, unter Verwendung derjenigen Umwandlungsvorschrift, die durch die jeweils übermittelten Daten gekennzeichnet wurde.

9. Ein computerlesbarer Datenträger, zur Darstellung oder Speicherung von Daten, die von einem Computer lesbar sind, wobei besagter Datenträger umfasst:
mehrere programmierte Befehle, die geeignet sind, an einen Computer die Ausführung eines Verfahrens gemäß einem der Ansprüche 1 bis 7 zu bewirken.
